# EUROPÄISCHE PATENTSCHRIFT

(11) **EP 2 059 999 B1**
(45) Veröffentlichungstag und Bekanntmachung des Hinweises auf die Patenterteilung: **07.09.2011**
(21) Anmeldenummer: 07784581.6
(22) Anmeldetag: 17.07.2007
(51) Int. Cl.: H02M 7/48

(54) **VERFAHREN ZUR REGELUNG VON WECHSELRICHTERN**
METHOD FOR CONTROL OF INVERTERS
PROCEDE DE REGULATION POUR ONDULEURS

(30) Priorität: 04.09.2006 AT 14702006
(43) Veröffentlichungstag der Anmeldung: 20.05.2009
(73) Patentinhaber: Fronius International GmbH, 4643 Pettenbach (AT)
(72) Erfinder: ANGERER, Christian, 4522 Sierning (AT); HEIGL, Hannes, 4731 Prambachkirchen (AT); KREUZER, Harald, 4616 Weißkirchen/ Traun. (AT)
(74) Vertreter: Sonn & Partner Patentanwälte
(86) Internationale Anmeldenummer: PCT/AT2007/000350
(87) Internationale Veröffentlichungsnummer: WO 2008/028203

(56) Entgegenhaltungen:
- EP-A1- 0 492 396
- EP-A1- 0 510 601
- DE-A1- 4 312 084
- DE-B1- 2 904 786
- US-A- 5 473 528
- US-A1- 2005 093 569
- VAN DER BROECK H ET AL: "A simple method for parallel operation of inverters" TELECOMMUNICATIONS ENERGY CONFERENCE, 1998. INTELEC. TWENTIETH INTERNATIONAL SAN FRANCISCO, CA, USA 4-8 OCT. 1998, PISCATAWAY, NJ, USA,IEEE, US, 4. Oktober 1998 (1998-10-04), Seiten 143-150, XP010350673 ISBN: 0-7803-5069-3 in der Anmeldung erwähnt

## Beschreibung

Die Erfindung betrifft ein Verfahren zur Regelung von Spannung und Leistung von mehreren am Ausgang parallel geschalteten Hochfrequenzwechselrichtern einer Inselwechselrichteranlage sowie zur Aufteilung der Last auf diese Hochfrequenzwechselrichter, die jeweils zumindest aus einem DC-DC-Wandler, einem Zwischenkreis und einem DC-AC-Wandler bestehen, wobei für jeden Hochfrequenzwechselrichter eine Führungsgröße zur Vorgabe eines Sollwerts für die Regelung einer Zwischenkreisspannung am Zwischenkreis des Hochfrequenzwechselrichters gebildet wird.

Die DE 43 12 084 A1 beschreibt eine Leistungsversorgung die aus mehreren Gleichstromrichtermodulen modular aufgebaut ist. Die Zwischenkreisspannung der parallel geschalteten Wechselrichter wird in Abhängigkeit des Ausgangsstromes des Wechselrichters geregelt.

Aus der DE 29 04 786 B1 ist ein Verfahren zur Regelung von Spannung und Lastaufteilung sowie zur Synchronisierung mehrerer Wechselrichter, deren Ausgänge miteinander verbunden sind, bekannt. Hierzu wird eine Ersatzregelgröße gebildet, die aus der Summe zwischen der Ausgangs-Wechselspannung des Wechselrichters und dem Produkt aus der Abweichung von einem Sollwert des Stroms des Wechselrichters am Ausgang, d.h. einem Querstrom, und einer komplexen Impedanz berechnet wird. Von Nachteil ist bei einem derartigen Regelkonzept, dass Messungenauigkeiten direkt in die Regelung einfließen und somit bereits bei einem geringen Messfehler ein verfälschter Ist-Wert als Regelgröße vorgegeben wird, wodurch am Ausgang auf eine ungewünschte Leistung geregelt wird. Weiters ist die Vorgabe eines Sollwerts für den Strom und das Messen der Ströme am Ausgang des Wechselrichters zur Ermittlung des zwischen den Wechselrichtern fließenden Querstroms notwendig, wodurch sich ein hoher Regelaufwand ergibt, der sich auch negativ auf die Reaktionszeit der Regelung auswirkt.

Weiters ist aus der DE 691 25 462 T2 ein Parallel-Wechselrichtersystem mit mehreren Wechselrichtern bekannt, die über einen Sammelleiter verbunden sind, so dass sich der Laststrom auf die Wechselrichter aufteilen kann. Es ist eine Stromdetektorschaltung vorgesehen, welche eine Querkomponente eines zwischen den Wechselrichtern fließenden Stroms, d.h. den Querstrom, ermittelt. Über eine Spannungsreglerschaltung kann die Ausgangsspannung des Wechselrichters geregelt werden, um die detektierte Querstromkomponente zu unterdrücken. Zur Bildung eines Spannungs-Sollsignals für die Regelung wird der Querstrom mit einer spezifischen Impedanz multipliziert, wobei die daraus berechnete Spannung von einer Referenzspannung subtrahiert wird, um so ein Spannungs-Sollsignal zu erzielen. Es besteht bei dieser Vorgehensweise der Nachteil eines hohen Regelaufwandes und der beeinträchtigten Regelgeschwindigkeit, da die Querströme ermittelt werden müssen, wozu eine Stromdetektorschaltung notwendig ist, welche die Abweichungen von einem vorzugebenden Soll-Strom ermitteln muss.

In der DE 692 17 109 T2 ist ein System zum Parallelbetrieb für eine Vielzahl von Wechselrichtern beschrieben, wobei hier wiederum eine Lastaufteilung erfolgt, indem der Querstrom zwischen den Wechselrichtern durch eine Stromerfassungsschaltung ermittelt wird, worauf eine Regelgröße gebildet wird, die vom ermittelten Querstrom abhängig ist. Es treten auch in diesem Fall die vorstehend beschriebenen Nachteile bezüglich des komplexen Regleraufbaus, des hohen Regelaufwands und der Reaktionszeit der Regelung auf.

Aus der US 5,473,528 A und dem Artikel Van Der Broeck, H. et al.: A simple method for parallel operation of inverters (Twentieth International Telecommunications Energy Conference; 4.-8. October 1998, pp 143-150) sind Parallelschaltungen von Wechselrichtermodulen bekannt, bei denen der benötigte Strom bzw. die benötigte Leistung ermittelt wird um einen Parallelbetrieb einer höheren Anzahl von Invertermodulen zu ermöglichen.

Die Aufgabe der vorliegenden Erfindung liegt darin, ein Verfahren zu schaffen, mit dem eine Regelung von Spannung und Leistung von mehreren am Ausgang parallel geschalteten Hochfrequenzwechselrichtern (HF-Wechselrichtern) unter verringertem Regelaufwand durchführbar ist. Weiters ist es Teilaufgabe der Erfindung, dass ein sehr stabiles und gegenüber Messungenauigkeiten unempfindliches Verhalten der Regelung erreicht wird.

Die erfindungsgemäße Aufgabe wird dadurch gelöst, dass die Belastung jedes HF-Wechselrichters von einer Steuervorrichtung am Eingang jedes Hochfrequenzwechselrichters durch Ermittlung der Eingangsleistung bestimmt wird, dass von jeder Steuervorrichtung ein virtueller Innenwiderstand jedes HF-Wechselrichters simuliert wird, über den ein von der ermittelten Belastung abhängiger virtueller Spannungsabfall hervorgerufen wird, welcher virtueller Spannungsabfall zur Regelung der Spannung des Zwischenkreises verwendet wird, so dass eine bewusste Änderung der Ausgangsspannung jedes HF-Wechselrichters hervorgerufen wird. Über den simulierten Widerstand ist eine Größe gefunden, die einen von der Last abhängigen virtuellen Spannungsabfall U_{VR} hervorruft, der als Regelgröße zur Stabilisierung des Wechselrichtersystems und zur Lastaufteilung verwendbar ist. Hierbei ist der Widerstand als Wert bzw. Kennlinie in einem Speicher hinterlegt, d.h. nicht schaltungstechnisch realisiert sondern sozusagen simuliert und es wird dieser zur Verarbeitung durch eine Programmlogik verwendet, so dass physikalisch kein Leistungsverlust durch den Widerstand auftritt. Von Vorteil ist bei dieser Lösung, dass die Ermittlung von zwischen den HF-Wechselrichtern fließenden Quer- bzw. Ausgleichsströmen nicht notwendig ist, um eine Regelung der Ausgangsspannung und weiters eine definierte Lastaufteilung auf mehrere HF-Wechselrichter zu ermöglichen. Somit wird der Regelaufwand stark vermindert und die Regelgeschwindigkeit durch Wegfallen der Erfassung und Auswertung von Querströmen erhöht. Weiters ergibt sich der Vorteil einer gegenüber Messfehlern bzw. Messungenauigkeiten unempfindlichen Regelung, da durch die flexible Vorgabe von Soll-Werten für die Zwischenkreisspannung und somit eine Anpassung der Ausgangsspannung in Form einer Netzspannungsschwankung in Abhängigkeit der benötigten Leistung bei falsch erkanntem Ist-Wert automatisch wieder in den Bereich des physikalisch richtigen Werts geregelt wird. Somit ergibt sich ein stabiles Regelverhalten und es werden durch die Messung bedingte Abweichungen der Ist-Werte automatisch ausgeglichen. Durch eine derartige Regelung wird auch eine definierte, beispielsweise symmetrische Lastaufteilung auf die parallel geschalteten HF-Wechselrichter erreicht. Es werden also unerwünschte Querströme zwischen den HF-Wechselrichtern verhindert, ohne dass Größen aus einem weiteren HF-Wechselrichter bzw. zwischen den HF-Wechselrichtern auftretende Größen, wie ein Querstrom, bekannt sein müssen. Es kann somit in vorteilhafter Weise jeder HF-Wechselrichter autonom geregelt werden, wodurch die Regelgeschwindigkeit erhöht und der Regelaufwand verringert wird.

Von Vorteil ist auch eine Vorgehensweise, bei der die Belastung des HF-Wechselrichters am Eingang des HF-Wechselrichters durch Ermittlung der Eingangsleistung bestimmt wird, da somit in einfacher Weise eine Bezugsgröße unabhängig von den weiteren HF-Wechselrichtern ermittelbar ist, die jeweils als Einflussgröße zur Stabilisierung des gesamten Wechselrichtersystems herangezogen wird.

Weiters kann anhand des von der Steuervorrichtung simulierten Innenwiderstands des HF-Wechselrichters eine Reduktionsgröße berechnet werden.

Dadurch, dass die Reduktionsgröße aus dem Produkt der Eingangsleistung Pᵢ und einem Anpassungsfaktor Kᵢ berechnet wird, kann die Reduktionsgröße durch Verwendung eines geeigneten Anpassungsfaktors Kᵢ auf unterschiedliche Anwendungsfälle und Betriebsmodi angepasst werden.

Eine Vorgehensweise, bei der der Anpassungsfaktor Kᵢ dem Typ des verwendeten HF-Wechselrichters zugeordnet wird und zur Berechnung der Reduktionsgröße ein entsprechend spezifischer Anpassungsfaktor Kᵢ aus einem Speicher der Steuervorrichtung geladen wird, ist hierbei besonders vorteilhaft.

Vorteilhaft ist es weiters, wenn für jeden Wechselrichter eine Führungsgröße Uᵢ' zur Vorgabe des Soll-Werts der Zwischenkreisspannung U_{ZKi} in Abhängigkeit der Reduktionsgröße ermittelt wird, da somit eine Regelung der Zwischenkreisspannung U_{ZKi} mit sehr einfachen Mitteln möglich ist, die flexibel auf die Belastung durch einen Verbraucher reagiert, wodurch die Stabilisierung und Lastaufteilung erfolgen kann.

Von Vorteil ist auch eine Vorgehensweise, bei der die Führungsgröße Uᵢ' aus der Differenz zwischen einer Referenzspannung U_{i_ref} und der Reduktionsgröße berechnet wird. Durch die Verminderung der Führungsgröße Uᵢ' um einen leistungsabhängigen Betrag, der durch den virtuellen Spannungsabfall U_{VR} repräsentiert wird, werden die vorstehend genannten Vorteile durch die flexiblen Soll-Wert-Vorgaben mit geringem Aufwand erreicht.

Wenn für den simulierten Widerstand bzw. die Reduktionsgröße reelle Größen, insbesondere Gleichstromgrößen, verwendet werden, wird der Aufwand der Regelung im Vergleich zur Verwendung von komplexen Größen, in denen Betrag und Phasenlage berücksichtigt sind und bei denen als Ist-Größen Wechselstromgrößen verwendet werden, in vorteilhafter Weise vereinfacht, wodurch sich die Reaktionszeit bzw. die Regelgeschwindigkeit erhöht.

Durch eine Vorgehensweise, bei der die Führungsgröße Uᵢ' zur Vorgabe des Soll-Werts der Zwischenkreisspannung U_{ZKi} bei einer Erhöhung der Belastung am Ausgang verringert wird bzw. bei einer Verringerung der Belastung am Ausgang erhöht wird, wird eine stabile und von Messungenauigkeiten nicht beeinträchtige Regelung der Ausgangsleistung der HF-Wechselrichter ermöglicht.

Ein Verfahrensablauf, bei dem zur Regelung der Zwischenkreisspannung U_{ZKi} ein Spannungsregler und diesem nachgeschaltet zumindest ein Stromregler, beispielsweise jeweils ein PI-Regler, verwendet werden, ist aufgrund der zweckmäßigen und der erprobten Mittel von Vorteil. Dabei wird durch den Spannungsregler eine weitere Führungsgröße Iᵢ' für den die Regelung des dem Zwischenkreis zugeführten Soll-Stroms durch den Stromregler vorgegeben, so dass über den dem Zwischenkreis zugeführten Soll-Strom die Zwischenkreisspannung U_{ZKi} festgelegt wird. Somit kann über die der Regelschleife zur Spannungsregelung untergeordneten Regelschleife zur Stromregelung die dem Zwischenkreis zugeführte Ladungsmenge derartig geregelt werden, dass sich die Zwischenkreisspannung U_{ZKi} entsprechend der Führungsgröße Uᵢ' einstellt.

Ein Verfahrensablauf, bei dem zur Regelung der Zwischenkreisspannung U_{ZKi} ein Drosselstrom I_{ZKi} gemessen und dem Zwischenkreis zugeführt wird, ist deshalb von Vorteil, da mit diesen Ist-Größen das Auslangen zur Durchführung der Regelung gefunden wird und diese Größen ausschließlich einem einzelnen HF-Wechselrichter zugeordnet sind, wodurch die Kommunikation zwischen den HF-Wechselrichtern zur Durchführung der Regelung minimiert wird. Die aufwändige Erfassung von Ausgleichs- bzw. Querströmen, die zwischen den HF-Wechselrichtern fließen, ist somit nicht notwendig, wodurch die Regelkomplexität verringert und die Reaktionszeit verbessert wird.

Dadurch, dass die Zwischenkreisspannung U_{ZKi} und gegebenenfalls der Drosselstrom I_{ZKi} jeweils zur Bildung einer Regelabweichung innerhalb des jeweiligen Regelkreises zum Spannungsregler und gegebenenfalls zum Stromregler in jedem HF-Wechselrichter rückgekoppelt werden, wird eine autonome Regelung der Ausgangsleistung jedes einzelnen HF-Wechselrichters ermöglicht, wobei gleichzeitig eine gewünschte Lastaufteilung auf die HF-Wechselrichter erfolgt.

Vorteilhaft ist auch ein Vorgehen, bei dem aus der Zwischenkreisspannung U_{ZKi} eine proportionale Ausgangs-Wechselspannung, insbesondere über den DC-AC-Wandler, erzeugt wird, da durch entsprechende Regelung der Zwischenkreisspannung U_{ZKi} die effektive Ausgangs-Wechselspannung mitgeregelt wird, wobei die Regelung in vorteilhafter Weise ausschließlich mit Gleichstromgrößen erfolgen kann.

Dadurch, dass die HF-Wechselrichter über eine Leitung mittels eines Signals bzw. eines Impulses zumindest zum Startzeitpunkt des Parallelbetriebs synchronisiert werden ist gewährleistet, dass die Sinus-Wechselspannung an den Ausgängen mehrerer HF-Wechselrichter nulldurchgangssynchron ist, wodurch Querströme zwischen den HF-Wechselrichtern durch Potentialunterschiede aufgrund unterschiedlicher Phasenlage der Wechselspannungen verhindert werden.

Als vorteilhaft erweist es sich weiters, wenn über die Leitung weiters zeitunkritische Daten, wie Fehler- oder Diagnosesignale, Leistungsparameter, Zustandsgrößen der Regelung usw. übertragen werden, da eine Auswertung und Weiterverarbeitung von Betriebszuständen, beispielsweise eine Visualisierung bzw. Protokollierung von Parametern oder dgl., vorgenommen werden kann, wobei dies für die Funktionsweise der Regelung nicht notwendig ist und die Regelgeschwindigkeit somit nicht beeinträchtigt wird.

Wenn der HF-Wechselrichter als Inselwechselrichter zur Versorgung eines von einem öffentlichen Energieversorgungsnetz entkoppelten Verbrauchers verwendet wird, können die für das öffentliche Netz erlaubten Toleranzen bezüglich Spannungsschwankungen zur Regelung der Ausgangsspannung als Schwankungsbreite herangezogen werden, wodurch in vorteilhafter Weise die Variabilität der Zwischenkreisspannung U_{ZKi} bzw. der Ausgangsspannung innerhalb dieser Schwankungsbreite ermöglicht wird, ohne dass die Funktionsweise des Verbrauchers beeinträchtigt wird.

Eine weitere vorteilhafte Verfahrensvariante liegt darin, dass die Regelung digital erfolgt und die Komponenten der Regelkreise aus einem Speicher der Steuervorrichtung aufgerufen und von einer Rechenschaltung, insbesondere einem Mikroprozessor, verarbeitet werden, wobei die Regelung somit sehr kostengünstig und flexibel realisiert werden kann.

Die vorliegende Erfindung wird anhand der beigefügten, schematischen Zeichnungen näher erläutert.

Darin zeigen:
Fig. 1 ein Blockschaltbild einer Anordnung von zwei Hochfrequenzwechselrichtern mit den wesentlichen Bestandteilen zur Durchführung des erfindungsgemäßen Verfahrens; und
Fig. 2 ein Blockschaltbild einer möglichen Ausführungsvariante des Regleraufbaus zur Regelung eines HF-Wechselrichters eines Wechselrichtersystems.

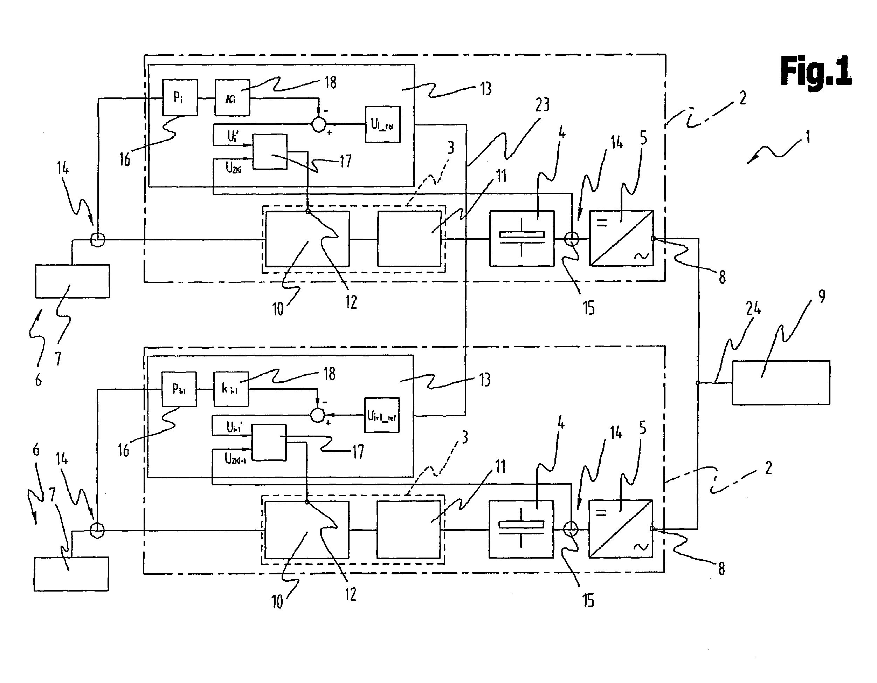

In Fig. 1 ist ein üblicher Aufbau eines Wechselrichtersystems 1 mit mehreren - hier zwei - am Ausgang parallel geschalteten HF-Wechselrichtern 2 (strichpunktiert umrandet), insbesondere Hochfrequenzwechselrichtern, dargestellt. Da die einzelnen Komponenten bzw. Baugruppen und Funktionen von HF-Wechselrichtern 2 bereits aus dem Stand der Technik bekannt sind, wird auf diese nachstehend nicht im Detail eingegangen.

Der HF-Wechselrichter 2 weist beispielsweise einen DC-DC-Wandler 3 (strichliert umrandet), einen Zwischenkreis 4 und einen DC-AC-Wandler 5 auf. Dabei haben die HF-Wechselrichter 2 eine besondere Eigenschaft und zwar, dass diese einen sehr kleinen Innenwiderstand aufweisen, gegenüber herkömmlichen 50Hz-Wechselrichtern, wie sie üblicherweise eingesetzt werden. An einem Eingang des DC-DC-Wandlers 3 ist eine Energiequelle 6 bzw. ein Energieerzeuger angeschlossen, die beispielsweise aus einem oder mehreren parallel und/oder seriell zueinander geschalteten Akkus 7 gebildet werden kann. Dabei ist es möglich, wie schematisch dargestellt und aus dem Stand der Technik bekannt, dass die Akkus 7 über Solarmodule 7a und einem Laderegler 7b geladen werden. Der DC-AC-Wandler 5 ist an einem Ausgang 8 mit einem oder mehreren elektrischen Verbrauchern 9, wie beispielsweise einem Kühlschrank, einem Funkgerät usw., verbunden. Bevorzugt wird das Wechselrichtersystem 1 als Inselwechselrichter zur Versorgung von vom öffentlichen Energieversorgungsnetz entkoppelten Verbrauchern 9 verwendet, die jedoch eine Energieversorgung wie bei einem öffentlichen Wechselspannungsnetz benötigen. Durch die Verwendung von mehreren HF-Wechselrichtern 2 kann einerseits mehr Leistung zum Betrieb der Verbraucher 9 bereitgestellt werden. Andererseits kann aufgrund des redundanten Aufbaus durch Verwendung mehrerer HF-Wechselrichter 2 die Ausfallswahrscheinlichkeit des Wechselrichtersystems 1 verringert werden, wodurch kritische Verbraucher 9 ausfallssicher mit Energie versorgt werden können.

Der DC-DC-Wandler 3 ist zumindest durch eine Leistungselektronik 10 und einen Transformator sowie einen AC-DC-Wandler (Block 11) gebildet. Die Leistungselektronik 10 weist eine Schaltvorrichtung auf, die an einem Steuereingang 12 gesteuert bzw. getaktet wird, so dass die an den Transformator in Block 11 zugeführte Energie beispielsweise mittels Pulsweitenmodulation (PWM) oder Phase-shift-Verfahren oder dgl. des Steuersignals am Steuereingang 12 festgelegt werden kann. Der Zwischenkreis 4 wird aus einem oder mehreren Kondensatoren, insbesondere Elektrolytkondensatoren, aufgebaut. Der Zwischenkreis 4 dient der Energiespeicherung und es wird dieser deshalb auf eine Zwischenkreisspannung U_{ZK} aufgeladen, aus der über den DC-AC-Wandler 5 am Ausgang 8 eine Wechselspannung erzeugt wird. Damit die gewünschte Wechselspannung für den Verbraucher 9 am Ausgang 8 erzeugt werden kann, wird der DC-AC-Wandler 5 durch einen entsprechenden Inverter, der die Gleichspannung in eine Wechselspannung umwandelt, gebildet. Weitere Bauelemente bzw. Baugruppen, wie beispielsweise Filterbeschaltungen, Glättungskondensatoren usw., sind in dem gezeigten Ausführungsbeispiel nicht dargestellt.

Weiters weist der HF-Wechselrichter 2 einen Regler bzw. eine Steuervorrichtung 13, die beispielsweise durch einen Mikroprozessor, einen Mikrocontroller oder einen Rechner gebildet sein kann, auf. Über die Steuervorrichtung 13 kann eine entsprechende Steuerung der einzelnen Baugruppen, insbesondere der darin angeordneten Schaltelemente, vorgenommen werden. In der Steuervorrichtung 13 sind hierzu die einzelnen Regel- bzw. Steuerabläufe durch entsprechende Software-Programme und/oder Daten bzw. Kennlinien gespeichert. Weiters ist bzw. sind mit der Steuervorrichtung 13 ein oder mehrere Messsysteme 14 zur Erfassung des Stromes und der Spannung an den verschiedensten Punkten des Wechselrichtersystems 1 angeordnet.

Mit dem in Fig. 1 gezeigten Aufbau ist ein Verfahren zur Regelung von Spannung und Strom der an den Ausgängen 5 parallel geschalteten HF-Wechselrichter 2 durchführbar, so dass eine definierte Aufteilung der durch den bzw. die Verbraucher 9 benötigten Leistung auf die einzelnen HF-Wechselrichter 2 erfolgen kann. Hierbei ist es möglich, dass die HF-Wechselrichter 2 baugleich ausgebildet sind, so dass eine symmetrische bzw. gleichmäßige Lastaufteilung zwischen den HF-Wechselrichtern 2 erfolgen kann. Weiters können auch HF-Wechselrichter 2 unterschiedlichen Typs, beispielsweise unterschiedlicher Leistungsklasse bzw. Nennleistung im Parallelbetrieb verwendet werden, wobei in diesem Fall eine entsprechende anteilsmäßige, insbesondere von der Nennleistung abhängige Lastaufteilung auf die HF-Wechselrichter 2 vorgenommen wird. Wird beispielsweise bei einem Wechselrichtersystem 1 mit zwei HF-Wechselrichtern 2 der zweite HF-Wechselrichter 2 mit doppelter Nennleistung gegenüber dem ersten HF-Wechselrichter 2 ausgeführt, wird das Wechselrichtersystem 1 derartig geregelt, dass der zweite HF-Wechselrichter 2 auch die doppelte Leistung in den Verbraucher 9 liefert.

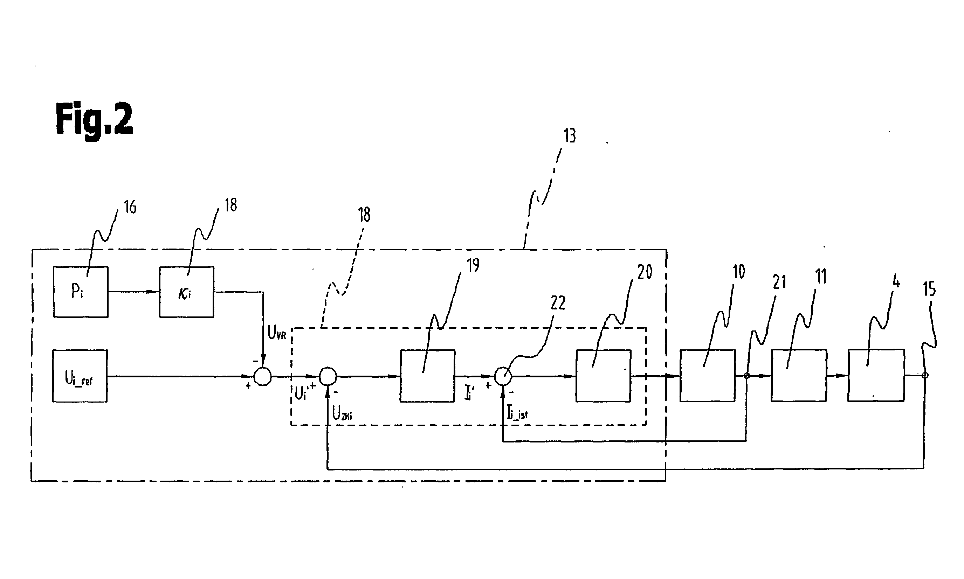

Das erfindungsgemäße Verfahren wird in weiterer Folge anhand der Zusammenschau von Fig. 1 und 2 erläutert, wobei die Fig. 2 ein Blockschaltbild des der Erfindung zugrunde liegenden Regelkonzepts zeigt. In Fig. 2 ist hierbei das Blockschaltbild der Regelung eines einzelnen HF-Wechselrichters 2 dargestellt, wobei dieses Blockschaltbild jeweils für jeden HF-Wechselrichter 2 des Wechselrichtersystems 1 gilt.

Am HF-Wechselrichter 2 wird über ein als Spannungssensor 15 ausgebildetes Messsystem 14 eine Zwischenkreisspannung U_{ZKi}, die am Ausgang des Zwischenkreises 4 anliegt, gemessen. Der Index i steht für einen der HF-Wechselrichter 2 des Wechselrichtersystems 1. Die Zwischenkreisspannung U_{ZKi} wird für die Regelung der Leistung am Ausgang 8 des HF-Wechselrichters 2 als Ist-Größe verwendet und somit nach jeder Abtastung in der Steuervorrichtung 13 hinterlegt.

Weiters wird über die von der Energiequelle 6 in den HF-Wechselrichter 2 gelieferte Eingangsleistung Pᵢ an einer Leistungserfassung 16 ermittelt, wobei dies mittels eines durch Strom- und Spannungssensoren gebildeten Messsystems 14 und einer Rechenlogik zur Leistungsberechnung erfolgen kann. Die Eingangsleistung Pᵢ am HF-Wechselrichter 2 wird von der am Ausgang 8 abgegebenen Leistung bestimmt, so dass sich eine Änderung der Ausgangsleistung des Wechselrichtersystems 1 am Eingang der HF-Wechselrichter 2 auswirkt.

Um nun an den Ausgängen 8 eine definierte Aufteilung der Leistung auf die HF-Wechselrichter 2 durchzuführen, wird ein Soll-Wert bzw. eine Führungsgröße Uᵢ' für die Zwischenkreisspannung U_{ZKi} vorgegeben, der an den Eingang eines Reglers 17 geführt wird. Der Regler 17 führt eine Regelung derartig aus, dass bei einer vorhandenen Differenz bzw. Regelabweichung zwischen der Führungsgröße Uᵢ' und der momentanen Zwischenkreisspannung U_{ZKi} eine Änderung des in den Zwischenkreis 4 zugeführten Stroms vorgenommen wird, wodurch sich die Zwischenkreisspannung U_{ZKi} wie gewünscht einstellt. Auf die in der Regelstrecke 18 gegebenenfalls vorhandenen Glieder bzw. Komponenten wie z.B. Komparatoren, Signalbegrenzer, Filter usw. wird an dieser Stelle nicht näher eingegangen, da diese dem auf dem Gebiet der Regelungstechnik tätigen Fachmann bekannt sind.

Erfindungsgemäß ist nun vorgesehen, dass die Führungsgröße Uᵢ' insbesondere innerhalb einer gewissen Schwankungsbreite variabel ist und in Abhängigkeit der Belastung des HF-Wechselrichters 2 durch den Verbraucher 9 am Ausgang 8 festgelegt wird. Die Schwankungsbreite wird hierbei so festgelegt, dass die sich am Ausgang 8 einstellende Spannungsschwankung innerhalb der erlaubten Toleranzen für einen Verbraucher 9 liegt. Bevorzugt entspricht die Schwankungsbreite den maximal erlaubten Spannungsschwankungen der öffentlichen Energieversorgungsnetze. Dabei kann die Spannungsschwankung beispielsweise zwischen 240V- und 220V- betragen.

Vorzugsweise wird die Belastung des HF-Wechselrichters 2 bestimmt, indem die Eingangsleistung Pᵢ von einer Leistungserfassung 16 am Eingang des HF-Wechselrichters 2 ermittelt wird. Somit kann die Führungsgröße Uᵢ' durch die Steuervorrichtung 13 in Abhängigkeit der Eingangsleistung Pᵢ verändert bzw. variiert werden. Insbesondere wird hierzu eine Referenzspannung U_{i_ref} vorgegeben, die um einen von der Eingangsleistung Pᵢ abhängigen Betrag vermindert wird. Dieser Betrag kann als simulierter bzw. virtueller Widerstand betrachtet werden, da über diesen durch Bildung einer Reduktionsgröße ein Spannungsabfall U_{VR} simuliert wird, der physikalisch nicht stattfindet, da die HF-Wechselrichter 2 einen sehr kleinen Innenwiderstand aufweisen, der sich nicht wesentlich auswirkt. Die Führungsgröße Uᵢ' wird somit aus der Differenz zwischen einer Referenzspannung U_{i_ref} und einem virtuellen Spannungsabfall U_{VR} gemäß Uᵢ' = U_{i_ref} - U_{VR} gebildet. Die Referenzspannung U_{i_ref} wird während der Regelung vorzugsweise auf einem konstanten Wert gehalten, wobei die Referenzspannung U_{i_ref} für alle im Wechselrichtersystem 1 verwendeten HF-Wechselrichter 2 identisch vorgegeben werden kann. Es besteht jedoch auch die Möglichkeit, dass der Wert der Referenzspannung U_{i_ref} vom Typ des verwendeten HF-Wechselrichters 2 abhängig ist und die Referenzspannung U_{i_ref} unabhängig und gegebenenfalls unterschiedlich für jeden HF-Wechselrichter 2 im Wechselrichtersystem 1 vorgegeben wird.

Die Reduktionsgröße bzw. der virtuelle Spannungsabfall U_{VR} ist bevorzugt proportional zu der an.der Leistungserfassung ermittelten Eingangsleistung Pᵢ. Zur Berechnung der Reduktionsgröße U_{VR} ist ein Auswerteglied 18, insbesondere Multiplikationsglied bzw. eine hinterlegte Kennlinie, vorgesehen, welches einen Anpassungsfaktor Kᵢ enthält, der bevorzugt spezifisch für den Wechselrichter 2 ist, so dass durch Multiplikation der Eingangsleistung Pᵢ mit dem Anpassungsfaktor Kᵢ die Reduktionsgröße U_{VR} berechnet wird. Die Reduktionsgröße U_{VR} bzw. der Anpassungsfaktor Kᵢ ist hierbei bevorzugt eine rein reelle Größe.

Die Führungsgröße Uᵢ' wird somit von der Reduktionsgröße U_{VR} abhängig, wodurch die Sollwertvorgabe der Regelung flexibel ist. Durch ein derartiges Vorgehen, bei dem die Zwischenkreisspannung U_{ZKi} von der Leistung am Ausgang 8 bzw. am Eingang des HF-Wechselrichters 2 vorgegeben wird, ist in vorteilhafter Weise eine vom Aufwand geringe und sehr schnelle Regelung der Leistung am Ausgang 8 möglich, wobei auch die definierte, beispielsweise symmetrische, Aufteilung der Last auf die HF-Wechselrichter 2 erfolgen kann.

Wird nun beispielsweise die Belastung durch den Verbraucher 9 erhöht, wird nach kurzzeitigen Entladevorgängen an den Zwischenkreisen 4 mehr Strom aus den HF-Wechselrichtern 2 entnommen, wobei die Zwischenspannung U_{ZKi} konstant gehalten wird. Erst bei Erkennung des Auftretens einer höheren Eingangsleistung durch die höhere Stromentnahme wird die Führungsgröße Uᵢ' um die Reduktionsgröße U_{ZKi} vermindert, so dass sich eine geringere Zwischenkreisspannung U_{ZKi} einstellt. Dieser Vorgang wird an allen HF-Wechselrichtern 2 parallel durchgeführt, so dass sich die Last auf die HF-Wechselrichter 2 symmetrisch oder anteilsmäßig in Abhängigkeit der jeweiligen Nennleistung aufteilt, da sich am Zwischenkreis 4 jedes HF-Wechselrichters 2 dieselbe Zwischenkreisspannung U_{ZKi} einstellt.

Die Vorgabe der Zwischenkreisspannung U_{ZKi} erfolgt bevorzugt durch einen Spannungsregler 19 und zumindest einen Stromregler 20 in dem Regler 17. Durch den Spannungsregler 19 wird am Ausgang eine weitere Führungsgröße Iᵢ' ausgegeben, die den Soll-Wert des in den Zwischenkreis 4 gelieferten Stroms vorgibt. Es ist ein weiteres Messsystem 14 durch einen Stromsensor 21 gebildet, der einen Ist-Strom in der Leistungselektronik 10 erfasst, der zu einem Subtrahierer 22 bzw. Vergleicher rückgeführt wird. Am Subtrahierer 22 wird aus der Differenz der Führungsgröße Iᵢ' und des Ist-Stroms eine Regelabweichung für den Eingang des Stromreglers 20 gebildet. Durch den Stromregler 20 wird somit die Ladung bzw. der Strom bestimmt, der dem Zwischenkreis 4 zugeführt wird, um diesen auf die Zwischenkreisspannung U_{ZKi} aufzuladen.

Es kann also gesagt werden, dass bei einer Inselwechselrichteranlage zur Regelung von Spannung und Leistung von mehreren am Ausgang parallel geschalteten HF-Wechselrichtern 2 sowie zur Aufteilung der Last auf diese HF-Wechselrichter 2, die jeweils zumindest aus einem DC-DC-Wandler 3, einem Zwischenkreis 4 und einem DC-AC-Wandler 5 bestehen, und dass für jeden HF-Wechselrichter 2 eine Führungsgröße Uᵢ' zur Vorgabe eines Sollwerts für die Regelung einer Zwischenkreisspannung U_{ZKi} am Zwischenkreis 4 des HF-Wechselrichters 2 gebildet wird. Bei jedem HF-Wechselrichter 2 wird von einer Steuervorrichtung 13 der benötigte Strom oder die benötigte Leistung ermittelt, worauf eine Änderung der Zwischenkreisspannung U_{ZKi} und somit eine Änderung der Ausgangspannung in Abhängigkeit der Belastung des HF-Wechselrichters 2 vorgenommen wird, so dass eine bewusste Netzspannungsschwankung am Ausgang des HF-Wechselrichters 2 hervorgerufen wird.

Durch die bewusste Hervorrufung einer Netzspannungsschwankung am Ausgang der HF-Wechselrichter 2 wird in einfacher Form erreicht, dass bei HF-Wechselrichtern 2 mit sehr kleinem Innenwiderstand eine Leistungsanpassung der parallel geschalteten HF-Wechselrichter 2 ermöglicht wird und somit entsprechende Querströme, wie sie bei ungleichen Leistungsaufteilungen bzw. Lastaufteilungen zustande kommen, vermieden werden. Dies erfolgt in einfachen Worten gesagt derart, dass beispielsweise bei ungleichen Lastaufteilungen ein HF-Wechselrichter 2 mehr Strom liefert als der andere. Somit wird bei dem HF-Wechselrichter 2, der mehr Strom liefert, durch den simulierten Innenwiderstand über die Steuervorrichtung 13 eine Änderung der Ausgangsspannung hervorgerufen, sprich die Ausgangsspannung gesenkt. Der weitere HF-Wechselrichter 2 liefert nunmehr mehr Strom, da die Ausgangsspannung noch gleich bzw. höher ist, so dass wiederum aufgrund der Regelung über den simulierten Innenwiderstand auch bei diesem HF-Wechselrichter 2 anschließend eine Änderung der Ausgangsspannung, sprich eine Netzspannungsschwankung, ausgeführt wird. Somit wird aufgrund der Regelung eine ständige Anpassung der Ausgangsspannung in Form einer Netzspannungsschwankung durchgeführt, so dass bei den parallel geschalteten HF-Wechselrichtern 2 sich eine gleiche Ausgangsspannungsabsenkung einstellt und somit beide HF-Wechselrichter 2 den gleichen Strom liefern und gleich belastet werden. Diese Regelung erfolgt auch in umgekehrter Richtung, sprich wenn weniger Leistung benötigt wird, wird eine Ausgangsspannungserhöhung durchgeführt, so dass wiederum beide HF-Wechselrichter 2 gleich belastet werden. Durch diese Regelung ist nun ersichtlich, dass jeder HF-Wechselrichter 2 eigenständig für sich die Regelung durchführt und somit keine zusätzlichen Querstrom-Messsysteme eingesetzt werden müssen, wie dies beim Stand der Technik der Fall ist.

Damit kann auch eine beliebige Anzahl von HF-Wechselrichtern 2 ohne zusätzlichen Aufwand zusammengeschaltet werden. Lediglich muss bei einer Erweiterung einer derartigen Inselwechselrichteranlage die neu hinzugekommenen HF-Wechselrichter 2 über die Leitung 23 für das Nulldurchgangssignal angeschlossen werden.

Ein weiterer Vorteil wird durch die bewusste Durchführung der Netzspannungsschwankung erreicht, und zwar, dass damit in einfacher Form auch ein Überlastschutz für die HF-Wechselrichter 2 gebildet werden kann. Dies geschieht beispielsweise derart, dass für die HF-Wechselrichter 2 ein oberer und ein unterer Grenzwert für die Ausgangsspannung, sprich der ausgeführten Netzspannungsschwankung, festgelegt wird, so dass bei zu hoher Last die HF-Wechselrichter 2 eine Absenkung der Ausgangsspannung nicht unterhalb dieser Grenzwerte durchführen können, da ansonst zu viel Energie von den HF-Wechselrichtern 2 geliefert werden würde und somit eine zu starke Belastung der HF-Wechselrichter 2 auftreten würde.

Es sei angemerkt, dass als Spannungsregler 19 und/oder Stromregler 20 aus dem Stand der Technik bekannte Reglersysteme, beispielsweise PI-Regler, verwendet werden können.

Die Regelung der dem Zwischenkreis 4 zugeführten Energiemenge kann durch PWM erfolgen, wobei durch den Hochfrequenz-Transformator in Block 11 eine Wandlung der Spannung derart erfolgt, dass der Zwischenkreis 4 auf eine Zwischenkreisspannung UZKi von ca. 300V bis 500V, insbesondere ca. 400V, aufgeladen wird. Über den DC-AC-Wandler 5 wird diese Zwischenkreisspannung UZKi in eine am Ausgang 8 anliegende Wechselspannung umgewandelt, beispielsweise eine Netzspannung von 230V und 50Hz, wobei hiezu aus dem Stand der Technik bekannte Verfahren bzw. Vorrichtungen, wie z.B. Wechselrichterbrücken oder dgl., verwendet werden können. Der Effektivwert der Wechselspannung am Ausgang 8 ist dabei proportional zum Betrag der Zwischenkreisspannung UZKi. Am Ausgang können aufgrund der variablen Zwischenkreisspannung UZKi Spannungsschwankungen auftreten, die jedoch nur innerhalb der erlaubten Toleranzen der öffentlichen Energieversorgungsnetze liegen. Bei Verbrauchern 9 mit hohen Anlaufströmen ist dies sogar vorteilhaft, da die Wechselspannung an den Ausgängen 8 während des Anlaufens aufgrund der hohen Belastung geringer ist, wodurch einer kurzzeitigen Überlastung des Wechselrichtersystems 1 entgegengewirkt wird.

Die Wechselrichter 2 des Wechselrichtersystems 1 sind über eine Leitung 23, beispielsweise einen Lichtwellenleiter, zum Signal- bzw. Datenaustausch miteinander verbunden. Die Wechselrichter 2 werden über diese Leitung 23 derart synchronisiert, dass die sinusförmigen Wechselspannungen an den Ausgängen 8 der Wechselrichter 2 in gemeinsamer Phase sind, d.h. gleiche Nulldurchgänge aufweisen. Diese Synchronisation kann beispielsweise durch einen Startimpuls erfolgen, über den die Erzeugung der Wechselspannung am Ausgang 8 jedes Wechselrichters 2 zeitgleich gestartet wird. Durch diese zeitliche Synchronisation der Nulldurchgänge der Wechselspannungen an den Ausgängen 8 werden durch Phasenungleichheit hervorgerufene Ausgleichs- bzw. Querströme verhindert.

Weiters besteht die Möglichkeit, dass über die Leitung 23 weitere, zeitunkritische Daten wie Fehler- oder Diagnosesignale, Leistungsparameter, Zustandsgrößen usw. übertragen werden. Somit können weitere Funktionen im Wechselrichtersystem 1 realisiert werden, beispielsweise eine Visualisierung oder Protokollierung von Parametern, wobei dies für die Regelung zur Versorgung eines Verbrauchers 9 mit Energie keinen Einfluss nimmt.

Es sei angemerkt, dass die einzelnen Funktionsblöcke in den Fig. 1 und 2 zumindest teilweise als Rechenlogik bzw. Software in einem Speicher der Steuervorrichtung 13 hinterlegt sein können, wobei dies insbesondere den Regler 17, das Auswerteglied 18 und Teile der Leistungserfassung 16 betrifft. Es erfolgt in diesem Fall eine digitale Regelung der abgegebenen Leistung an den Ausgängen 8 der Wechselrichter 2, was einen flexiblen und kostengünstigen Reglerentwurf ermöglicht.

Weiters können somit die im Speicher der Steuervorrichtung 13 hinterlegten Werte einfach geändert werden und/oder es können mehrere Konfigurationen eines Wechselrichtersystems 1 hinterlegt werden. Beispielsweise ist es möglich, dass unterschiedliche Anpassungsfaktoren Kᵢ, die jeweils spezifisch für einen Typ bzw. eine Leistungsklasse eines Wechselrichters 2 sind, hinterlegt werden, die in Abhängigkeit eines verwendeten Typs eines Wechselrichters 2 aus dem Speicher geladen werden. Somit kann über die Vorgabe eines dem Wechselrichter 2 zugeordneten Anpassungsfaktors Kᵢ die abgegebene Leistung am Ausgang 8 des Wechselrichters 2 bestimmt werden, wodurch ein heterogener Aufbau des Wechselrichtersystems 1 mit unterschiedlichen Typen von Wechselrichtern 2 mit entsprechend unterschiedlicher Nennleistung möglich wird.

Die Erkennung des Typs eines Wechselrichters 2 kann durch die Steuervorrichtung 13 beispielsweise in einem Diagnosemodus automatisch erfolgen oder manuell durch Benutzereingaben festgelegt werden, wodurch der entsprechende Anpassungsfaktor Kᵢ ausgewählt wird.

Abschließend sei angemerkt, dass zur Versorgung des Verbrauchers 9 das Wechselrichtersystem 1 nicht auf zwei HF-Wechselrichter 2 beschränkt ist, sondern eine beliebige Anzahl von HF-Wechselrichtern 2 am Ausgang 8 an einem zum Verbraucher 9 führenden Sammelleiter 24 parallel betrieben werden können.

Es können die einzelnen in den Fig. 1, 2 gezeigten Ausführungen bzw. Teile der zu diesen Figuren gehörigen Beschreibung den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

## Patentansprüche

1. Verfahren zur Regelung von Spannung und Leistung von mehreren am Ausgang parallel geschalteten HF-Wechselrichtern (2) einer Inselwechselrichteranlage sowie zur Aufteilung der Last auf diese HF-Wechselrichter (2), die jeweils zumindest aus einem DC-DC-wandler (3), einem Zwischenkreis (4) und einem DC-AC-Wandler (5) bestehen, wobei für jeden HF-Wechselrichter (2) eine Führungsgröße (Uᵢ') zur Vorgabe eines Sollwerts für die Regelung einer Zwischenkreisspannung (U_{ZKi}) am Zwischenkreis (4) des HF-Wechselrichters (2) gebildet wird, **dadurch gekennzeichnet, dass** die Belastung jedes HF-Wechselrichters (2) von einer Steuervorrichtung (13) am Eingang jedes HF-Wechselrichters (2) durch Ermittlung der Eingangsleistung (Pᵢ) bestimmt wird, dass von jeder Steuervorrichtung (13) ein virtueller Innenwiderstand jedes HF-Wechselrichters (2) simuliert wird, über den ein von der ermittelten Belastung abhängiger virtueller Spannungsabfall (U_{VR}) hervorgerufen wird, welcher virtueller Spannungsabfall (U_{VR}) zur Regelung der Spannung (U_{ZKi}) des Zwischenkreises (4) verwendet wird, sodass eine bewusste Änderung der Ausgangsspannung jedes HF-Wechselrichters (2) hervorgerufen wird.

2. Verfahren nach Anspruch 1, **dadurch gekennzeichnet, dass** anhand des von der Steuervorrichtung (13) simulierten Innenwiderstands jedes HF-Wechselrichters (2) eine Reduktionsgröße berechnet wird.

3. Verfahren nach Anspruch 2, **dadurch gekennzeichnet, dass** die Reduktionsgröße aus dem Produkt der Eingangsleistung (Pᵢ) und einem Anpassungsfaktor (Kᵢ) berechnet wird.

4. Verfahren nach Anspruch 3, **dadurch gekennzeichnet, dass** der Anpassungsfaktor (Kᵢ) dem Typ des verwendeten HF-Wechselrichters (2) zugeordnet wird und zur Berechnung der Reduktionsgröße ein entsprechend spezifischer Anpassungsfaktor (Kᵢ) aus einem Speicher der Steuervorrichtung (13) geladen wird.

5. Verfahren nach einem der Ansprüche 2 bis 4, **dadurch gekennzeichnet, dass** für jeden HF-Wechselrichter (2) eine Führungsgröße (Uᵢ') zur Vorgabe des Soll-Werts der Zwischenkreisspannung (U_{ZKi}) in Abhängigkeit der Reduktionsgröße ermittelt wird.

6. Verfahren nach Anspruch 5, **dadurch gekennzeichnet, dass** die Führungsgröße (Uᵢ') aus der Differenz zwischen einer Referenzspannung (U_{i_ref}) und der Reduktionsgröße berechnet wird.

7. Verfahren nach einem der Ansprüche 2 bis 6, **dadurch gekennzeichnet, dass** für den simulierten Widerstand bzw. die Reduktionsgröße reelle Größen, insbesondere Gleichstromgrößen, verwendet werden.

8. Verfahren nach einem der Ansprüche 5 bis 7, **dadurch gekennzeichnet, dass** die Führungsgröße (Uᵢ') zur Vorgabe des Soll-Werts der Zwischenkreisspannung (U_{ZKi}) bei einer Erhöhung der Belastung des HF-Wechselrichters (2) am Ausgang (8) verringert wird bzw. bei einer Verringerung der Belastung des HF-Wechselrichters (2) am Ausgang (8) erhöht wird.

9. Verfahren nach einem der vorhergehenden Ansprüche, **dadurch gekennzeichnet, dass** zur Regelung der Zwischenkreisspannung (U_{ZKi}) ein Spannungsregler (19) und diesem nachgeschaltet zumindest ein Stromregler (20), beispielsweise jeweils ein PI-Regler, verwendet werden, wobei durch den Spannungsregler (19) eine weitere Führungsgröße (Iᵢ') für den die Regelung des dem Zwischenkreis (4) zugeführten Soll-Stroms durch den Stromregler (20) vorgegeben wird, so dass über den dem Zwischenkreis (4) zugeführten Soll-Strom die Zwischenkreisspannung (U_{ZKi}) festgelegt wird.

10. Verfahren nach einem der vorhergehenden Ansprüche, **dadurch gekennzeichnet, dass** zur Regelung der Zwischenkreisspannung (U_{ZKi}) ein Drosselstrom (I_{ZKi}) gemessen und dem Zwischenkreis (4) zugeführt wird.

11. Verfahren nach Anspruch 9 oder 10, **dadurch gekennzeichnet, dass** die Zwischenkreisspannung (U_{ZKi}) und gegebenenfalls der Drosselstrom (I_{ZKi}) zur Bildung einer Regelabweichung zum Spannungsregler (19) und gegebenenfalls zum Stromregler (20) rückgekoppelt werden.

12. Verfahren nach einem der vorhergehenden Ansprüche, **dadurch gekennzeichnet, dass** die HF-Wechselrichter (2) über eine Leitung (23) mittels eines Signals bzw. eines Impulses zumindest zum Startzeitpunkt des Parallelbetriebs synchronisiert werden.

13. Verfahren nach Anspruch 12, **dadurch gekennzeichnet, dass** über die Leitung (23) weiters zeitunkritische Daten, wie Fehler- oder Diagnosesignale, Leistungsparameter, Zustandsgrößen usw., übertragen werden.

## Claims

1. A method for controlling the voltage and power of several HF inverters (2), connected in parallel at the output, of an electrically isolated inverter assembly as well as for distributing the load to these HF inverters (2) each consisting of at least one DC-DC converter (3), one intermediate circuit (4) and one DC-AC converter (5), with a command variable (Uᵢ') being formed for each HF inverter (2) so as to preset a nominal value for control of an intermediate-circuit voltage (U_{ZKi}) at the intermediate circuit (4) of the HF inverter (2), **characterized in that** the load of each HF inverter (2) is determined by a control unit (13) at the input of each HF inverter (2) by measuring the input power (Pᵢ), that a virtual internal resistance of each HF inverter (2) is simulated by each control unit (13), via which internal resistance a virtual voltage drop (U_{VR}) is caused which depends on the load determined, which virtual voltage drop (U_{VR}) is used for controlling the voltage (U_{ZKi}) of the intermediate circuit (4) so as to produce a purposive change in the output voltage of each HF inverter (2).

2. The method according to claim 1, **characterized in that** a reduction variable is calculated based on the internal resistance of each HF inverter (2) simulated by the control unit (13).

3. The method according to claim 2, **characterized in that** the reduction variable is calculated from the product of the input voltage (Pᵢ) and a matching factor (Kᵢ).

4. The method according to claim 3, **characterized in that** the matching factor (Kᵢ) is assigned to the type of the HF inverter (2) used, and that a correspondingly specific matching factor (Kᵢ) is loaded from a memory of the control unit (13) for calculating the reduction variable.

5. The method according to any one of claims 2 to 4, **characterized in that** a command variable (Uᵢ') for presetting the nominal value of the intermediate-circuit voltage (U_{ZKi}) is detected for each HF inverter (2) as a function of the reduction variable.

6. The method according to claim 5, **characterized in that** the command variable (Uᵢ') is calculated from the difference between a reference voltage (U_{i_ref}) and the reduction variable.

7. The method according to any one of claims 2 to 6, **characterized in that** real variables, in particular direct-current variables, are used for the simulated resistance and/or reduction variable.

8. The method according to any one of claims 5 to 7, **characterized in that** the command variable (Uᵢ') for presetting the nominal value of the intermediate-circuit voltage (U_{ZKi}) is reduced when the load of the HF inverter (2) increases at the output (8) and is increased when the load of the inverter (2) decreases at the output (8).

9. The method according to any one of the preceding claims, **characterized in that** a voltage controller (19) and at least one current controller (20), e.g. one PI controller each, arranged downstream thereof are used for controlling the intermediate-circuit voltage (U_{ZKi}), wherein a further command variable (Iᵢ') is preset by the voltage controller (19) for control of the nominal current supplied to the intermediate circuit (4) by the current controller (20) so that the intermediate-circuit voltage (U_{ZKi}) will be set via the nominal current supplied to the intermediate circuit (4).

10. The method according to any one of the preceding claims, **characterized in that** a choke current (I_{ZKi}) is measured for controlling the intermediate-circuit voltage U_{ZKi} and is supplied to the intermediate circuit (4).

11. The method according to claim 9 or 10, **characterized in that** the intermediate-circuit voltage (U_{ZKi}) and optionally the choke current (I_{ZKi}) are fed back to the voltage controller (19) and optionally to the current controller (20) for creating a control deviation.

12. The method according to any one of the preceding claims, **characterized in that** at least when the parallel operation is started, the HF inverters (2) are synchronized via a line (23) by means of a signal and/or pulse.

13. The method according to claim 12, **characterized in that** furthermore time-uncritical data, e.g. error or diagnosis signals, performance parameters, state variables, and the like, are transferred via the line (23).

## Revendications

1. Procédé pour le réglage de la tension et de la puissance de plusieurs onduleurs haute fréquence (2), branchés en parallèle à la sortie, dans une installation d'onduleurs îlots, ainsi que pour la répartition de la charge sur lesdits onduleurs haute fréquence (2) qui sont constitués chacun, au moins, d'un convertisseur DC-DC (3), d'un circuit intermédiaire (4) et d'un convertisseur DC-AC (5), dans lequel pour chaque onduleur haute fréquence (2), une grandeur de commande (Uᵢ') est formée pour déterminer une valeur de consigne pour le réglage d'une tension de circuit intermédiaire (U_{ZKi}) de l'onduleur haute fréquence (2) au niveau du circuit intermédiaire (4), **caractérisé en ce que** la charge de chaque onduleur haute fréquence (2) est déterminée par un dispositif de commande (13) à l'entrée de chaque onduleur haute fréquence (2) par la détection de la puissance d'entrée (Pᵢ), **en ce que** chaque dispositif de commande (13) simule une résistance interne virtuelle de chaque onduleur haute fréquence (2), par l'intermédiaire de laquelle une chute de tension (U_{VR}) virtuelle se produit en fonction de la charge détectée, laquelle chute de tension (U_{VR}) virtuelle est utilisée pour le réglage de la tension (U_{ZKi}) du circuit intermédiaire (4), de manière à provoquer délibérément la modification de la tension de sortie de chaque onduleur haute fréquence (2).

2. Procédé selon la revendication 1, **caractérisé en ce qu'**une valeur de réduction est calculée à partir de la résistance interne de chaque onduleur haute fréquence (2) simulée par le dispositif de commande (13).

3. Procédé selon la revendication 2, **caractérisé en ce que** la valeur de réduction est calculée à partir du produit de la puissance d'entrée (Pᵢ) et d'un facteur d'adaptation (Kᵢ).

4. Procédé selon la revendication 3, **caractérisé en ce que** le facteur d'adaptation (Kᵢ) est associé au type de l'onduleur haute fréquence (2) utilisé et **en ce que** pour le calcul de la valeur de réduction, un facteur d'adaptation (Kᵢ) spécifique correspondant est chargé à partir d'une mémoire du dispositif de commande (13).

5. Procédé selon l'une quelconque des revendications 2 à 4, **caractérisé en ce que** pour chaque onduleur haute fréquence (2), une grandeur de commande (Uᵢ') pour la détermination de la valeur de consigne de la tension de circuit intermédiaire (U_{ZKi}) est détectée en fonction de la valeur de réduction.

6. Procédé selon la revendication 5, **caractérisé en ce que** la grandeur de commande (Uᵢ') est calculée à partir de la différence entre une tension de référence (U_{i_ref}) et la valeur de réduction.

7. Procédé selon l'une quelconque des revendications 2 à 6, **caractérisé en ce que** des grandeurs réelles, en particulier des grandeurs du courant continu, sont utilisées pour la résistance simulée ou la valeur de réduction.

8. Procédé selon l'une quelconque des revendications 5 à 7, **caractérisé en ce que** la grandeur de commande (Uᵢ'), destinée à définir la valeur de consigne de la tension de circuit intermédiaire (U_{ZKi}), est diminuée à la sortie (8) en présence d'une augmentation de la charge de l'onduleur haute fréquence (2) ou est augmentée à la sortie (8) en présence d'une diminution de la charge de l'onduleur haute fréquence (2).

9. Procédé selon l'une quelconque des revendications précédentes, **caractérisé en ce que** l'on utilise pour le réglage de la tension de circuit intermédiaire (U_{ZKi}) un régulateur de tension (19) et, branché en aval de ce premier, au moins un régulateur de courant (20), tel que respectivement un régulateur à action proportionnelle et intégrale, dans lequel une autre grandeur de commande (Iᵢ') est déterminée, par le régulateur de tension, pour le réglage du courant de commande qui est conduit, par le régulateur de courant (20, vers le circuit intermédiaire (4) de sorte que la tension de circuit intermédiaire (U_{ZKi}) est déterminé par l'intermédiaire du courant de consigne conduit vers le circuit intermédiaire (4).

10. Procédé selon l'une quelconque des revendications précédentes, **caractérisé en ce que** pour le réglage de la tension de circuit intermédiaire (U_{ZKi}), un courant de self induction (I_{ZKi}) est mesuré et conduit vers le circuit intermédiaire (4).

11. Procédé selon la revendication 9 ou 10, **caractérisé en ce que** la tension de circuit intermédiaire (U_{ZKi}), et, le cas échéant, le courant de self induction (I_{ZKi}) sont couplés par réaction pour former un écart de régulation par rapport au régulateur de tension (19) et, le cas échéant, par rapport au régulateur de courant (20).

12. Procédé selon l'une quelconque des revendications précédentes, **caractérisé en ce que** les onduleurs haute fréquence (2) sont synchronisés via une ligne de conduction (23), au moyen d'un signal ou d'une impulsion, au moins au moment du démarrage du fonctionnement en parallèle.

13. Procédé selon la revendication 12, **caractérisé en ce que** d'autres données à temporisation non critique telles que des signaux d'erreur ou des signaux de diagnostic, des paramètres de puissance, des grandeurs d'état, etc., sont transmises via la ligne de conduction (23).
